# EUROPEAN PATENT SPECIFICATION

(11) **EP 3 418 094 B1**
(45) Date of publication and mention of the grant of the patent: **29.07.2020**
(21) Application number: 18178905.8
(22) Date of filing: 20.06.2018
(51) Int. Cl.: B60K 5/12, B60K 5/02, B60K 17/22

(54) **SYSTEM FOR LOWERING CRASH STRESS ON A VEHICULAR CABIN OF AN INDUSTRIAL VEHICLE FOR GOODS TRANSPORTATION**
SYSTEM ZUR SENKUNG DER CRASHBELASTUNG EINER FAHRZEUGKABINE EINES NUTZFAHRZEUGS FÜR DEN GÜTERTRANSPORT
SYSTÈME POUR DIMINUER LE STRESS DE COLLISION SUR UNE CABINE DE VÉHICULE D'UN VÉHICULE INDUSTRIEL DE TRANSPORT DE MARCHANDISES

(30) Priority: 20.06.2017 IT 201700068690
(43) Date of publication of application: 26.12.2018
(73) Proprietor: Iveco S.p.A., 10156 Torino (IT)
(72) Inventor: CERETTO CASTIGLIANO, Enrico, 10078 VENARIA REALE (TO) (IT)
(74) Representative: Fiume, Orazio

(56) References cited:
- DE-A1-102005 006 944
- DE-A1-102013 021 009
- JP-A- H01 186 429
- JP-A- H11 278 071
- JP-A- 2000 001 125
- JP-U- S6 213 721
- JP-U- S58 139 325

## Description

### Technical Field of the Invention

This invention refers to the field of industrial vehicles for goods transportation and more specifically to a system for lowering crash stress on a related vehicular cabin.

### State of the Art

In the event of a frontal impact at high speed the vehicle mass is one of the parameters which regulate the energy exchanged between the vehicle and a rigid barrier against which the vehicle is caused to impact.

The impact speed is a prerequisite of the impact test (crash test) and thereby it cannot be changed.

In order to reduce the impact energy, given by the formula E=1/2mv², one can work on the vehicle mass trying to lighten it as much as possible and/or insert some bodywork portions with controlled deformation so as to absorb most of the impact energy.

In the scope of industrial vehicles, it is not easy to lighten the vehicle given that they are designed to transport goods up to attaining the maximum mass for their category. Hence it is clear that in most cases a lightening of the vehicle leads to its weakening.

Moreover, in industrial vehicles for goods transportation a significant portion of the vehicle is used for the storage of goods, therefore setting up areas of the bodywork for controlled deformation takes space away from goods storage. In addition, the vehicular cabin has to be fitted with suitable reinforcing elements that prevent excessive deformations or even the crushing of the cabin to protect the integrity of the passengers.

Clearly the weight of said reinforcing elements is not negligible.

Known collision systems are disclosed in documents JPH11278071 A and JP2000001125 A.

Therefore, the only feasible option seems to be that of inserting airbags in order to protect the passengers of the vehicle cabin.

### Summary of the Invention

Hence, the purpose of this invention is to specify a system for lowering crash test stress on a vehicular cabin of an industrial vehicle for goods transportation capable of overcoming all the above-mentioned problems by drastically reducing the impact energy that hits the vehicular cabin in the event of a frontal impact.

According to the invention, there is proposed a system as defined in claim 1 and an industrial vehicle as defined in claim 7.

The basic idea of this invention is that of allowing a reciprocal movement between the drivetrain and the vehicle chassis at least in the first stages of the impact, that is before it affects the vehicular cabin.

The drivetrain is formed by the internal combustion engine and by the related transmission. According to the invention, the vehicle chassis is of the kind with side members and the drivetrain is arranged in a longitudinal configuration and associated with said side members so as to slide forwards with respect to the side members during a frontal impact.

Usefully, the opportunity of decoupling the drivetrain before the impact affects the vehicular cabin, entails a reduction of the mass by about ¼ compared with the initial one. Usefully, the energy that the vehicular cabin has to dissipate is proportional to a lower mass, due to such decoupling of the drivetrain from the vehicle chassis. Usefully, as a result of the reduction of the stress to which the cabin is subjected to, it is possible to reduce the reinforcing elements which were previously used to provide the necessary rigidity to the vehicular cabin. The above results in an overall lightening of the vehicle, thereby enabling to transport a greater volume of goods and a lower consumption of fuel with a related reduction in the CO2 emissions released into the atmosphere.

According to the invention, at least some of the support elements that associate the drivetrain with the side members are capable of resisting to the vertical stresses and of deforming and/or breaking when they are subjected to longitudinal stresses. Whereby, given that the stresses of a frontal impact spread at first to the side members and only after to the drivetrain through said support elements, the inertia of the drivetrain forces the support elements to yield and possibly to break obtaining a free forward slide of the drivetrain.

The longitudinal direction is the one associated with the development of the vehicle.

The drivetrain is associated with the chassis through front support elements that associate the internal combustion engine with the side members in their front end part. Moreover, the drivetrain is associated with the chassis through a rear support element that associates the transmission with an intermediate part of the side members, according to the related longitudinal development.

In a preferred embodiment of the invention, at least the rear support element is configured to break in case of frontal impact, while the front support elements deform.

Thereby, the drivetrain carries out a forward translation and a rotation that lowers the transmission even up to touching the ground.

In a preferred embodiment of the invention, the rear support element comprises a crossbar connected over the side members so that the transmission is suspended to it through for example a rubber joint having a breakage coefficient which is calculated in order to break during the frontal impact.

According to a first perspective of the invention, the fact of uncoupling the rear part of the drivetrain from the side members greatly reduces the deformation of the side members and therefore of the overhead cabin.

The drive shaft that connects the transmission with the rear axle of the vehicle, bends and breaks in the connection joints during the rotation or the roto-translation of the engine, since it is not sized to endure the strains induced by the rotation of the drivetrain. According to another perspective of the invention, if the front support elements are associated with a front end part of the drivetrain, said rotation of the latter does not interfere, if not insignificantly, with the overhead cabin. The subject-matter of this invention is a system for lowering crash stress on a vehicular cabin of an industrial vehicle for goods transportation in accordance with claim 1.

The subject-matter of this invention also includes an industrial vehicle for goods transportation equipped with the above-mentioned system.

The claims describe the preferred variations of the invention and are an integral part of this description.

### Brief Description of Drawings

Further purposes and advantages of this invention will be clearer in the detailed description below of an example of its embodiment (and of one of its variations) and in the annexed drawings provided only for information purposes and not limited to, wherein:
in Figure 1 a perspective view of a front portion of an industrial vehicle is shown in which a drivetrain and a vehicle chassis are identifiable;
in Figure 2 a top view from of the front portion of the Figure 1 vehicle is shown;
in Figure 3 another perspective view of the portion of the Figure 1 vehicle is shown from a different point of view, highlighting the detail of a preferred variation of the system subject-matter of this invention:
in Figure 4 a further view of the detail of Figure 3 is shown according to a further point of view;
In Figure 5 a top view of a vehicle incorporating this invention is shown.

The same reference numbers and letters in the Figures identify the same elements and components.

In the context of this description the term "second" component does not imply the presence of a "first" component. Said terms are indeed used only for the sake of clarity and they must not be understood in a limitative manner.

### Detailed description of embodiment examples

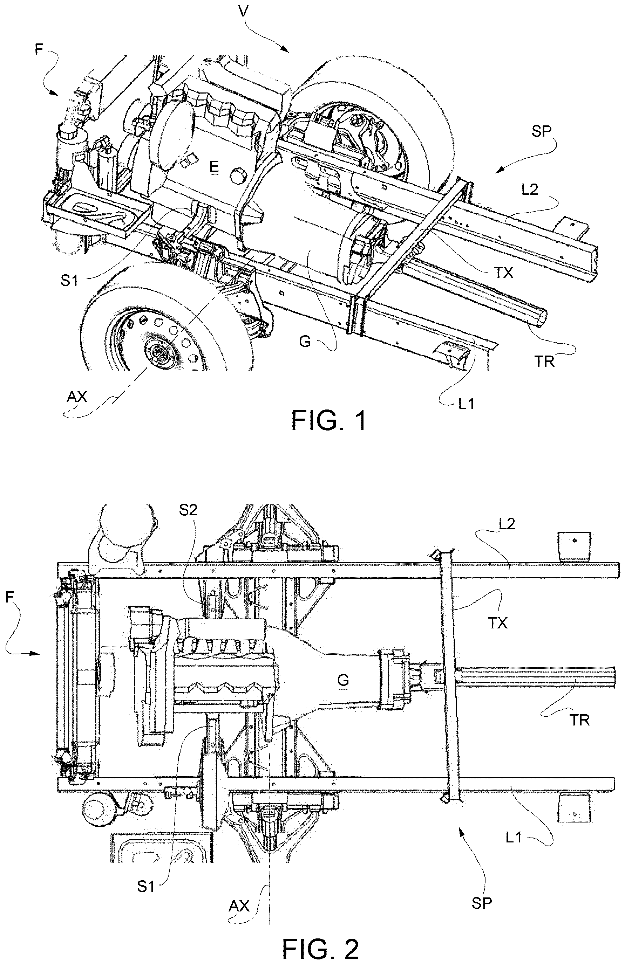

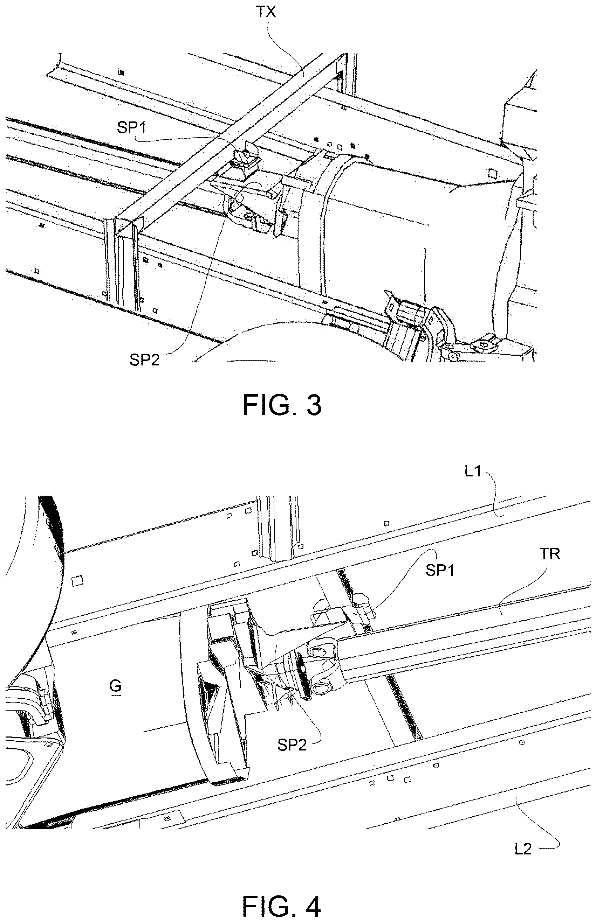

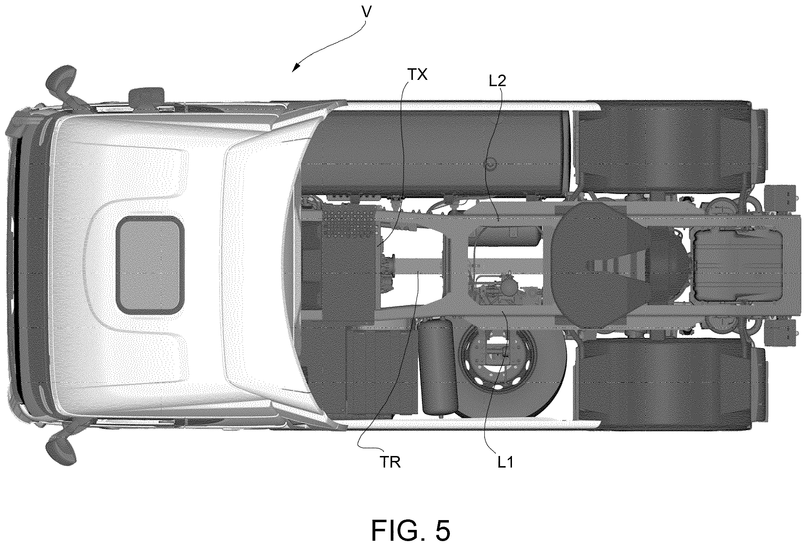

With reference to Figures 1-5, an industrial vehicle V for goods transportation, according to this invention, comprising a chassis essentially formed by a pair of side members L1, L2 more or less parallel to each other, which identify a front part F of the vehicle. Moreover the vehicle comprises a drivetrain EG, formed by an internal combustion engine E and a related transmission G, arranged longitudinally between said side members L1, L2.

The system for lowering crash stress on the cabin of said vehicle comprises the support elements S1, S2, SP arranged to associate said drivetrain to said side members and sized to allow a reciprocal movement of the drivetrain when said vehicle is subjected to a frontal impact.

In other words, the support elements allow at least one sliding of the drivetrain on the side members, that is axially with respect to a frontal impact.

Accordingly, the vehicle comprises a pair of side members, between which the drivetrain is housed, while the cabin is associated with the side members over the drivetrain.

Generally, the drivetrain defines a longitudinal length, that is parallel to the side members, greater than the cabin's. Therefore, the rear anchorage point of the drivetrain to the side members is rearward with respect to the cabin fastening points.

The support elements are preferably resting over the side members. They are made either so as to be able to deform/yield under the effect of the longitudinal stresses, or they are slidably associated on the side members. According to a preferred variation of this invention the support elements are configured to impart a rotational-translational motion to said drivetrain when said vehicle is subjected to a frontal impact. The support elements specifically comprise:
- front support elements S1 and S2 arranged on opposite sides of the internal combustion engine, to associate the latter with an end part of said side members that identifies said front part F of the vehicle and at least
- a rear support element SP comprising
   - a crossbar TX resting over and fastened, with the respective opposite ends, to said side members,
   - a bracket SP2, associated with said transmission G, which projects rearwards of the transmission over a drive shaft TR associated with said transmission,
- a joint SP1 made of a resilient material arranged to hang said bracket on said crossbar.

In order to obtain said rotational-translational motion of the drivetrain it is ensured that the joint made of a resilient material yields completely during the impact. While the front support elements deform or slide along the side members, allowing a forward movement of the drivetrain.

Thus, the drivetrain moves forward towards the obstacle, rotating, given that the rear part of the transmission lowers even to touch the ground.

Said yield of the rear support element can be achieved through some wedges between the support elements and the side members in which the direction of engagement/disengagement lies in the plane identified by the two side members. So that, while the front support elements deform or slide on the side members, the rear support element disengages releasing the rear part of the transmission.

It is preferred that the front support elements are configured to bend in the plane identified by the development axes of said side members L1, L2.

The rubber joint SP1 is arranged to break upon exceeding a predetermined stress parallel to the development of the side members.

The transmission G is connected to the rear traction wheels of the vehicle through a drive shaft. Said drive shaft is normally tubular-shaped and it is adapted to be crushed and/or break when said drivetrain carries out said reciprocal movement.

Equivalently, the breakage in the connection area between the drive shaft and the rear axle can be foreseen.

Embodiment variations are possible to the not limitative described example within the scope of protection of this invention as defined by the appended claims.

## Claims

1. A system for lowering crash stress on a vehicular cabin of an industrial vehicle (V) for goods transportation comprising a chassis comprising a pair of side members (L1, L2) more or less parallel to each other, which identify a front part (F) of the vehicle, a drivetrain (EG) comprising an internal combustion engine (E) and a related transmission (G), arranged longitudinally between said side members (L1, L2), wherein the system comprises support elements (S1, S2, SP) arranged to associate said drivetrain with said side members and sized to allow a reciprocal movement of the drivetrain when said vehicle is subjected to a frontal impact, wherein the support elements comprise at least two front support elements (S1, S2) arranged on opposite sides of said internal combustion engine and resting over said side members, and at least one rear support element (SP) comprising
- a crossbar (TX) resting, with opposite ends, over said side members,
- a bracket (SP2), associated with said transmission (G), which projects rearwards of the transmission over a drive shaft (TR) associated with said transmission,
- a joint (SP1) made of a resilient material arranged to hang said bracket on said crossbar,
wherein, in the event of a frontal impact, said front support elements (S1, S2) are configured to deform or to slide along said side members allowing a forward movement of said drivetrain and said joint made of a resilient material is arranged to break allowing said rear part of the transmission to lower itself operationally towards the ground.

2. The system according to claim 1, wherein said support elements are configured to impart a rotational-translational motion to said drivetrain when said vehicle is subjected to a frontal impact.

3. The system according to claim 1 or 2, wherein said front support elements (S1, S2) are associated with end parts of said side members, that define said front part (F) of the vehicle.

4. The system according to claim 3, wherein said front support elements are configured to bend in a plane identified by the development axes of said side members (L1, L2).

5. The system according to claims 3 or 4, wherein said rubber joint is arranged to break upon exceeding a predetermined stress parallel to the development axes of said side members.

6. The system according to any one of claims from 3 to 6, wherein said drive shaft is adapted to be crushed and/or break when said drivetrain carries out said reciprocal movement.

7. Industrial vehicle (V) for goods transportation comprising a chassis comprising a pair of side members (L1, L2) more or less parallel to each other, which identify a front part (F) of the vehicle, a drivetrain (EG) comprising an internal combustion engine (E) and a related transmission (G), arranged longitudinally between said side members (L1, L2) and **characterised by** comprising the system according to any one of the preceding claims 1 to 6.

## Patentansprüche

1. System zur Senkung der Crashbelastung einer Fahrzeugkabine eines Nutzfahrzeugs (V) für den Gütertransport, umfassend ein Chassis, das im Wesentlichen parallele Seitenteile (L1, L2) die einen Vorderteil (F) des Fahrzeugs definieren, einen Antriebsstrang (EG), der einen internen Verbrennungsmotor (E) und ein verbundenes Getriebe (G) umfasst, wobei der Antriebsstrang längs zwischen den Seitenteilen (L1, L2) angeordnet ist, wobei das System Trägerelemente (S1, S2, SP) umfasst, die angeordnet sind, um den Antriebsstrang mit den Seitenteilen zu verbinden und die bemessen sind, um eine reziproke Bewegung des Antriebsstrangs zu ermöglichen, wenn das Fahrzeug einem frontalen Aufprall ausgesetzt ist, wobei die Trägerelemente mindestens zwei vordere Trägerelemente (S1, S2) umfassen, die auf gegenüberliegenden Seiten des internen Verbrennungsmotors und oberhalb der Seitenteile angeordnet sind, und mindestens ein hinteres Trägerelement (SP), umfassend
- einen Querträger (TX), der mit seinen gegenüberliegenden Enden über den Seitenteilen aufliegt,
- eine Halterung (SP2), verbunden mit dem Getriebe (G), die vom Getriebe nach hinten über eine Antriebswelle (TR) erstreckt, welche mit dem Getriebe verbunden ist,
- ein Verbindungselement (SP1) aus einem elastischen Material, angeordnet, um die Halterung an dem Querträger aufzuhängen,
wobei, im Falle eines frontalen Aufpralls, die vorderen Trägerelemente (S1, S2) ausgeführt sind, um sich zu verformen oder sich entlang der Seitenteile zu verschieben, um eine Vorwärtsbewegung des Antriebsstrangs zu ermöglichen, und wobei das Verbindungselement aus einem elastischen Material so ausgeführt ist, dass es zerbricht und der hintere Teil des Getriebes sich funktionell Richtung Boden absenken kann.

2. System nach Anspruch 1, wobei die Trägerelemente ausgeführt sind, um auf den Antriebsstrang eine rotations-translatorische Bewegung zu übertragen, wenn das Fahrzeug einem frontalen Aufprall ausgesetzt ist.

3. System nach Anspruch 1 oder 2, wobei die vorderen Trägerelemente (S1, S2) mit den Endabschnitten der Seitenteile verbunden sind, welche den Vorderteil (F) des Fahrzeugs definieren.

4. System nach Anspruch 3, wobei die vorderen Trägerelemente ausgeführt sind, um sich in einer Ebene zu verbiegen, die durch die Erstreckungsachsen der Seitenteile (L1, L2) definiert wird.

5. System nach Anspruch 3 oder 4, wobei das Gummi-Verbindungselement ausgeführt ist, um bei Überschreiten einer vorgegebenen Belastung parallel zu den Erstreckungsachsen der Seitenteile zu zerbrechen.

6. System nach einem der Ansprüche 3 bis 6, wobei die Antriebswelle ausgeführt ist, um gequetscht und/oder zerbrochen zu werden, wenn der Antriebsstrang die reziproke Bewegung ausführt.

7. Nutzfahrzeug (V) für den Warentransport, umfassend ein Chassis, das im Wesentlichen parallele Seitenteile (L1, L2), die einen Vorderteil (F) des Fahrzeugs definieren, und einen Antriebsstrang (EG) umfasst, der einen internen Verbrennungsmotor (E) und ein verbundenes Getriebe (G) umfasst, wobei der Antriebsstrang längs zwischen den Seitenteilen (L1, L2) angeordnet ist, **gekennzeichnet durch** Umfassen eines Systems nach einem der Ansprüche 1 bis 6.

## Revendications

1. Système pour diminuer les contraintes de collision sur une cabine de véhicule d'un véhicule industriel (V) pour transport de marchandises comprenant un châssis comprenant une paire d'éléments latéraux (L1, L2) plus ou moins parallèles l'un à l'autre, qui identifient une partie avant (F) du véhicule, un train de transmission (EG) comprenant un moteur à combustion interne (E) et une transmission apparentée (G), agencé longitudinalement entre lesdits éléments latéraux (L1, L2), dans lequel le système comprend des éléments de soutien (S1, S2, SP) agencés pour associer ledit train de transmission auxdits éléments latéraux et dimensionnés pour permettre un déplacement en va-et-vient du train de transmission quand ledit véhicule est soumis à un choc frontal, dans lequel les éléments de soutien comprennent au moins deux éléments de soutien avant (S1, S2) agencés sur des côtés opposés dudit moteur à combustion interne et reposant sur lesdits éléments latéraux, et au moins un élément de soutien arrière (SP) comprenant :
- une barre transversale (TX) reposant, avec des extrémités opposées, sur lesdits éléments latéraux,
- un support (SP2), associé à ladite transmission (G), qui se projette vers l'arrière de la transmission sur un arbre d'entraînement (TR) associé à ladite transmission,
- un raccord (SP1) composé d'un matériau élastique agencé pour suspendre ledit support sur ladite barre transversale,
dans lequel, dans le cas d'un choc frontal, lesdits éléments de soutien avant (S1, S2) sont configurés pour se déformer ou pour coulisser le long desdits éléments latéraux permettant un déplacement vers l'avant dudit train de transmission et ledit raccord composé d'un matériau élastique est agencé pour se rompre permettant à ladite partie arrière de la transmission de s'abaisser elle-même fonctionnellement vers le sol.

2. Système selon la revendication 1, dans lequel lesdits éléments de soutien sont configurés pour conférer un mouvement de rotation-translation audit train de transmission quand ledit véhicule est soumis à un choc frontal.

3. Système selon la revendication 1 ou 2, dans lequel lesdits éléments de soutien avant (S1, S2) sont associés à des parties d'extrémité desdits éléments latéraux, qui définissent ladite partie avant (F) du véhicule.

4. Système selon la revendication 3, dans lequel lesdits éléments de soutien avant sont configurés pour se plier dans un plan identifié par les axes de développement desdits éléments latéraux (L1, L2).

5. Système selon la revendication 3 ou 4, dans lequel ledit raccord en caoutchouc est agencé pour se rompre lors d'un dépassement d'une contrainte prédéterminée parallèle aux axes de développement desdits éléments latéraux.

6. Système selon l'une quelconque des revendications 3 à 6, dans lequel ledit arbre d'entraînement est adapté pour être écrasé et/ou se rompre quand ledit train de transmission réalise ledit mouvement de va-et-vient.

7. Véhicule industriel (V) pour transport de marchandises comprenant un châssis comprenant une paire d'éléments latéraux (L1, L2) plus ou moins parallèles l'un à l'autre, qui identifient une partie avant (F) du véhicule, un train de transmission (EG) comprenant un moteur à combustion interne (E) et une transmission apparentée (G), agencé longitudinalement entre lesdits éléments latéraux (L1, L2) et **caractérisé en ce qu'**il comprend le système selon l'une quelconque des revendications 1 à 6.
